Europäisches Patentamt

European Patent Office

Office européen des brevets

(11) Publication number: **0 045 323**
**B1**

(19)

(12) **EUROPEAN PATENT SPECIFICATION**

(45) Date of publication of patent specification: **09.01.85**

(21) Application number: **80104571.7**

(22) Date of filing: **02.08.80**

(51) Int. Cl.⁴: **C 08 F 8/36,** C 08 C 19/20,
C 08 J 7/14

(54) **Improved process for sulfonating solid organic polymers.**

(43) Date of publication of application:
**10.02.82 Bulletin 82/06**

(45) Publication of the grant of the patent:
**09.01.85 Bulletin 85/02**

(84) Designated Contracting States:
**BE DE FR GB IT NL SE**

(56) References cited:
**FR-A-1 280 353**
**GB-A- 593 677**
**US-A-3 542 746**

(73) Proprietor: **THE DOW CHEMICAL COMPANY**
**Dow Center 2030 Abbott Road Post Office Box**
**1967**
**Midland Michigan 48640 (US)**

(72) Inventor: **Walles, Wilhelm Egbert**
**6648 North River Road**
**Freeland Michigan (US)**

(74) Representative: **Hann, Michael, Dr. et al**
**Marburger Strasse 38**
**D-6300 Giessen (DE)**

Courier Press, Leamington Spa, England.

**0 045 323**

**Description**

This invention relates to a process for sulfonating solid organic polymers.

The use of organic polymers in the fabrication of shaped articles such as filaments, fibers, films, sheets, and closure members, such as bottles, tanks and other containers, and other molded articles is well known. Unfortunately, articles made of most organic polymers, particularly predominantly hydrocarbon polymers, are non-electroconductive, are nonadherent to polar materials such as inks, paints, dyes and various polar adhesives and are readily permeated by oleophilic materials such as liquid and gaseous hydrocarbons. As a result of the foregoing deficiencies, many of such organic polymers must be treated with various agents which impart varying degrees of electroconductivity, adhesivity and impermeability to oleophilic materials. Of such treatment techniques, those involving surface sulfonation of the polymer offer many advantages from the standpoint of economy and versatility.

Exemplary prior art techniques for sulfonating polymers are described in the following patents: U.S. Patent Nos. 2,400,720; 2,937,066; 2,786,780; 2,832,696; 3,218,301; 3,542,746, 3,613,957; 3,629,025 and 3,740,258.

As a general rule, most of the prior art techniques for the sulfonation of organic polymers, require relatively long reaction times. Accordingly, it would be highly desirable to provide a process for sulfonating organic polymers wherein such reaction times are significantly reduced without deleteriously affecting the desirable properties of the sulfonated materials.

The present invention is such a more efficient process for sulfonating normally solid organic polymers. This is a process for sulfonating organic polymers which comprises contacting a sulfonatable solid organic polymer which has hydrogen atoms bonded to carbon atoms which are replaceable by sulfonic acid groups with a dry gaseous mixture comprising sulfur trioxide and halogen selected from the group consisting of fluorine, bromine, chlorine or mixtures thereof which inherently form interhalogen compounds, wherein the amount of sulfur trioxide is sufficient to provide a desired degree of sulfonation and the amount of halogen is sufficient to accelerate the rate of sulfonation at least 10 percent relative to the rate of sulfonation achieved by using sulfur trioxide in the absence of halogen.

Surprisingly, the presence of the halogen with the sulfur trioxide during the sulfonation reaction greatly accelerates the rate of sulfonation without deleteriously affecting the sulfonated organic polymers. It is also found that the combination of sulfur trioxide and halogen often increases the rate of halogenation of the organic polymer, although such halogenation is merely an optional benefit and not essential for the practice of the present invention. As a result of the improved rates of sulfonation, polymeric containers being sulfonated to render them impermeable to hydrocarbons can be produced in times which are less than 1/2 to 2/3 of the times required to sulfonate the same containers in the absence of the halogen.

Accordingly, the resulting sulfonated organic polymers produced in the practice of the present invention exhibit improved antistatic properties, adhesion to a wide variety of polar materials such as dyes, paints and inks, improved receptivity to metal coatings and impermeability to oleophilic materials and low molecular weight gases such as oxygen and carbon dioxide. Such surface sulfonated polymers are useful as substrates for painting and metal coating and are useful as enclosure members for containing hydrocarbons such as gasoline. Exemplary uses include containers such as gasoline and other fuel tanks, fuel barrels and drums, oleaginous food containers such as bags, tubs and cartons; fibrous materials for use in carpets and clothing and other fabric; plastic substrates and metal-clad plastics such as capacitors and auto parts; and plastic substrates for use in electrostatic spray painting.

For the practice of this invention, the organic polymer includes any sulfonatable, solid, including foamed solid, organic polymer. Sulfonatable polymers have hydrogen atoms bonded to the carbon atoms which are replaceable by sulfonic acid groups. Thus, polytetrafluoroethylene is not a sulfonatable organic polymer since it does not have any replaceable hydrogen atoms and is therefore not sulfonatable.

Exemplary suitable organic polymers are thermosetting plastics such as epoxy resins, phenol formaldehyde resins, urea-formaldehyde resins, silicones, polyurethanes and the like. Suitable organic polymers are also thermoplastic polymers including addition-type homopolymers and copolymers and blends thereof prepared from the aliphatic alpha-monoolefins, aliphatic conjugated and nonconjugated dienes, trienes and polyenes, halogenated aliphatic olefins, alpha-beta-ethylenically unsaturated carboxylic acids, vinyl esters of nonpolymerizable carboxylic acids, alkyl esters of alpha-beta-ethylenically unsaturated carboxylic acids, monovinylidene aromatic monomers, alpha-beta-ethylenically unsaturated nitriles and amides, ethylenically unsaturated ethers and ketones and other ethylenically unsaturated monomers which polymerize across the ethylenic bond to form polymers having linear carbon to carbon backbone molecular structure with a plurality of free hydrogen atoms attached to the chain and/or attached to carbon atoms of the substituents of the chain. Also included as suitable organic polymers are the thermoplastic condensation-type polymers exemplified by the polyamides such as nylon, the polyimides, the polyesters such as polyethylene terephthalate, the polycarbonates derived from dihydric phenols such as bisphenol A, the polyethers and the like. Organic polymers of special interest are the thermoplastic addition homopolymer, copolymers and mixture of

2

polymers of the following monomers: the aliphatic monoolefins such as ethylene, propylene, butene-1 and isobutylene; aliphatic conjugated dienes such as butadiene; monovinylidene aromatic monomers such as styrene and alpha-beta-ethylenically unsaturated nitriles such as acrylonitrile.

In addition to the aforementioned organic polymers, other organic compounds such as simple organic compounds having hydrogen atoms bonded to carbon atoms which are replaceable by sulfonic acid groups are also suitably employed in the practice of this invention. Examples of such compounds include alkylarenes such as linear and branched alkyl benzenes wherein alkyl has from 8 to 18 carbon atoms, e.g., dodecylbenzene, decylbenzene, tetradecylbenzene and the like; alkanes having from 8 to 20 carbons; and other hydrocarbons.

Prior to effecting sulfonation of organic polymers in accordance with the process of the present invention, it is desirable to fabricate the organic polymer in conventional manner into the form of the desired article. Before or during such fabrication, the organic polymers can be mixed with conventional additives for the polymers such as antioxidants, fillers, pigments, dyes, extenders, plasticizers and the like without impairing the subsequent sulfonation treatment. It should be understood, however, that particulate forms of the organic polymer or other suitable organic compound may be employed in the sulfonation process of the present invention.

In the practice of the sulfonation process sulfonation of the organic material is effected by a vapor phase process employing gaseous sulfur trioxide and a suitably active halogen such as fluorine, bromine, chlorine or mixtures thereof which inherently form interhalogen compounds such as ClF and BrCl. Preferably, a gaseous halogen such as chlorine is employed. While the gaseous phase reactants can consist entirely of sulfur trioxide and the halogen, it is generally preferred to dilute them with an inert gas such as air, nitrogen, helium or carbon dioxide. The concentration of sulfur trioxide in the gaseous reactant mixture is suitably that amount which will provide a degree of surface sulfonation of an organic polymer in the range from 0.001 to 50 milligrams of sulfur trioxide equivalents in the form of sulfonic acid groups per square centimeter of surface, preferably from 0.06 to 10 milligrams per square centimeter. While it is found that about 0.001 milligram of sulfur trioxide equivalents per square centimeter provides the surface of the organic polymer with antistatic properties and satisfactory adhesion, it is found that at least 0.015 milligram of sulfur trioxide equivalent per square centimeter, preferably at least about 0.06 milligram per square centimeter, is required to provide desirable impermeability to oleophilic materials. Generally, concentrations of sulfur trioxide that will produce such degrees of sulfonation in an inert gas vary from 0.1 to 50 volume percent of sulfur trioxide based on total volume of gaseous reactants, preferably from 2 to 25, most preferably from 5 to 20, volume percent of sulfur trioxide in the dry mixture. Volume concentrations can also correspond to 0.003 to 3 grams of sulfur trioxide per liter (at atmospheric pressure) for the range of 0.1 to 50 volume percent and 0.45 to 0.75 gram of sulfur trioxide per liter for the range of 15 to 25 volume percent. Without an inert gas, the volume concentration of 100 volume percent can be used for $SO_3$.

The amount of halogen employed is suitably that which will accelerate the sulfonation reaction such that the time of sulfonation is only 90 percent, preferably from 50 to 75 percent, of that required to provide the same degree of sulfonation in the presence of the same concentration of sulfur trioxide in the absence of halogen. Preferred acceleration of the sulfonation reaction is achieved by employing a ratio of from 0.1 to 10, most preferably from 4 to 8, halogen per sulfur trioxide. Such ratios of halogen correspond to concentrations from 0.1 to 99, preferably from 8 to 98, most preferably from 20 to 80, volume percent of halogen in the dry mixture.

Time of reaction required to produce an acceptable degree of sulfonation varies with the organic material being sulfonated, the concentration of sulfur trioxide and halogen and the temperature. For example, at room temperature (25°C), a gaseous phase reactant mixture containing 8.2 volume percent of sulfur trioxide, 63.1 volume percent of chlorine and 28.7 volume percent of nitrogen or dry air (62 mm $SO_3$+480 mm $Cl_2$+218 mm $N_2$ or air) requires about 2 minutes to sulfonate high density polyethylene to a degree of 2 milligrams $SO_3/cm^2$, about 4 minutes to provide a degree of 3.3 milligrams $SO_3/cm^2$ and about 6 minutes to provide a degree of 4.2 milligrams $SO_3/cm^2$. At higher temperatures, treatment times and/or sulfur trioxide/halogen concentration may be reduced to achieve the same degree of sulfonation. Although temperature is not particularly critical in the practice of the method of this invention, it is generally advantageous to employ reaction temperatures in the range from 10 to 50°C, preferably from 15 to 30°C. The pressure at which the process of this invention can be carried out is suitably in the range from subatmospheric to superatmospheric. For convenience, it is preferred to carry out the reaction at atmospheric pressure.

In addition to the foregoing requirements, it is generally preferred to exclude water vapor from the gaseous reactant mixture by conventional means, e.g., a conventional dryer tube, since the sulfur trioxide will react with water in liquid or vapor form to form droplets of sulfuric acid of varying concentration thereby inhibiting or preventing uniform sulfonation of the organic material. Normally, it is desirable to maintain the concentration of water in the reaction medium at a level less than 0.01 volume percent based on the volume of the gaseous mixture of reactants, preferably less than about 0.001 volume percent.

In addition to the aforementioned sulfonation reaction, the combined presence of sulfur trioxide and halogen in the gaseous mixture of reactants facilitates a halogenation reaction with the organic polymer even in the absence of ultraviolet light. In fact, it is found that the presence of sulfur trioxide in the gaseous mixture of reactants accelerates the reaction of the halogen with the organic material to a degree similar to that observed for the sulfonation reaction. As a result, when organic polymers are surface sulfonated in accordance with the foregoing conditions, it is observed that the surfaces of the polymer contain from 0.04 to 0.1 milliequivalent of halogen per milliequivalent of sulfur trioxide.

Following the sulfonation/halogenation reaction of the present invention, the reacted organic polymer may be employed as is or may be further neutralized with base or treated with epoxide or other reactant as is conventional to do.

The following examples are given to further illustrate a few embodiments of the invention and should not be construed as limiting its scope. In these examples, all parts and percentages are by weight unless otherwise indicated.

Example 1

A film portion (3 cm×20 cm×0.06 mm) of polyethylene (density=0.959, melt index at 2.186 kg and 190°C=1.5 decig/min) (Sample No. 1) is placed in a glass desiccator having an inlet and outlet for the passage of gas. The desiccator is evacuated to a pressure of 13 Pa (0.1 mm Hg) and a gaseous mixture of reactants consisting of 19.7 volume percent of sulfur trioxide, 25 volume percent of chlorine, and a remaining amount of dry air is introduced into the desiccator in an amount sufficient to provide a pressure of 101.3 kpa (760 mm Hg). The gaseous mixture reactants are allowed to react with the polyethylene film at 25°C for a period of about 5 minutes after which time a vacuum is pulled on the desiccator to remove excess $SO_3$ and chlorine. The polyethylene film is removed from the desiccator and neutralized by immersing it in a 2 percent aqueous ammonia solution and then dried. Then a portion of the neutralized film is removed and analyzed for percent sulfur and percent chlorine. The remaining film is tested for oxygen permeability and the results of the permeability and analysis are reported in Table I.

To further illustrate this invention, a film portion (3 cm×20 cm×0.06 mm) of another polyethylene (density=0.964, melt index=6 decig/min) (Sample No. 2) is similarly treated, analyzed and tested for oxygen permeability. The results of these tests are also reported in Table I.

For purposes of comparison, other samples of the aforementioned polyethylene films are subjected to conditions similar to the foregoing conditions except that the gaseous reactant mixture contains only chlorine and inert gas in one set of runs (Sample Nos. $A_2$ and $B_2$) and the gaseous mixture reactants contain only sulfur trioxide and inert gas in the other set of runs (Sample Nos. $A_1$ and $B_1$). The resulting films are analyzed for sulfur and chlorine and are tested for oxygen permeability. These results are also reported in Table I.

TABLE I

| | | | | Analysis of tested film[3] | | |
| No. | Gaseous reactants[1] | | | | | $O_2$ Permeability[2] |
| | Type | Vol. % (kpa) | | % S | % Cl | cc/100 in²/day/1.01 bar |
|---|---|---|---|---|---|---|
| 1 | $SO_3+Cl_2$ | 19.7+25 | (20.0+25.3) | 1.9 | 0.08 | 1 |
| $A_1$* | $SO_3$ | 19.7 | (20.0) | 1.5 | 0 | 34 |
| $A_2$* | $Cl_2$ | 25 | (25.3) | 0 | 0.04 | 176 |
| $C_1$* | None | — | | 0 | 0 | 190 |
| 2 | $SO_3+Cl_2$ | 19.7+25 | (20.0+25.3) | 3.9 | 0.41 | 0.8 |
| $B_1$* | $SO_3$ | 19.7 | (20.0) | 2.2 | 0 | 3.3 |
| $B_2$* | $Cl_2$ | 25 | (25.3) | 0 | 0.17 | 690 |
| $C_2$* | None | — | | 0 | 0 | 750 |

*Not an example of the invention.

[1]Volume percent of particular reactant in gaseous mixture of reactants wherein any remaining amount is dry air.

[2]Oxygen permeation rate in cubic centimeters/645 cm² of film/24 hours at 1.01 bar measured using a mass spectrometer to determine permeated oxygen at 20°C for 24 hours.

[3]The film thickness of the four samples in group 1 was 63.5 micrometers and the film thickness of the four samples in group 2 was 28 micrometers.

As evidenced by the data in Table I, high density polyethylenes are reacted to a higher degree of sulfonation and chlorination within a given time when a combined mixture of sulfur trioxide and chlorine are employed. Also as evidenced by the data, substantially greater barrier to oxygen is imparted when the gaseous mixture contains both sulfur trioxide and chlorine.

Example 2

Using the high density polyethylene film as employed in Example 1 (Sample No. 1), a portion of the film (2 cm×20 cm×0.06 mm) is attached to a Quartz spring of a vacuum microbalance. Into an evacuated 5-liter flask is injected liquid $SO_3$, following vaporization of the liquid $SO_3$, dry air and chlorine are added to the 5-liter flask to provide an $SO_3$ vapor pressure of 8.3 kpa (62 mm Hg) and a chlorine vapor pressure of 32.0 kpa. The resulting gaseous mixture becomes uniformly mixed by allowing the mixture to stand for a period of 10 minutes. This gaseous mixture is allowed to pass into the Quartz vacuum chamber of the microbalance containing the polyethylene film. The chamber was previously evacuated to a pressure of 13 Pa (0.1 mm Hg) prior to entry of the gaseous reactant. During the reaction, the microbalance is maintained at a temperature of 25°C. Periodically the film weight is measured and the results are recorded in Table II.

Following completion of the foregoing sulfonation run, the resulting sulfonated polyethylene film is removed and another unsulfonated sample of polyethylene film as employed in the preceding procedure is attached to the Quartz spring and sulfonated by the same procedure except that the chlorine vapor pressure is 64.0 kpa (480 mm Hg). Periodically the polyethylene film is weighed and the results are recorded in Table II.

For the purposes of comparison, another sulfonation run is carried out by the foregoing procedures except that no chlorine gas is introduced into the vacuum chamber and as a result the gaseous sulfonation reactant consists of sulfur trioxide and dry air wherein the sulfur trioxide vapor pressure is 8.3 kpa (62 mm Hg). The film sample is again weighed at predetermined intervals and the results are recorded in Table II.

TABLE II

| Sample No. | Gaseous reactants type/pressure, (kpa) | Minutes | Weight gain, mg/cm$^2$ | | | | | | |
|---|---|---|---|---|---|---|---|---|---|
| | | | 1 | 2 | 4 | 6 | 8 | 10 | 12 |
| 1 | $SO_3/(8.3)+Cl_2/(32.0)$ | | 0.5 | 1.38 | 2.14 | 2.74 | Not Determined | | |
| 2 | $SO_3/(8.3)+Cl_2/(64.0)$ | | 0.97 | 1.86 | 3.14 | 4.10 | Not Determined | | |
| C$_1$ | $SO_3/(8.3)$ | | 0.1 | 0.46 | 1.15 | 1.70 | 2.16 | 2.55 | 2.91 |
| C$_2$ | $Cl_2/(41.3)$ | | 0.024 | 0.029 | 0.034 | 0.039 | 0.044 | 0.050 | 0.054 |

As evidenced by the foregoing date, the presence of chlorine in a gaseous sulfonating agent accelerates the rate of sulfonation.

**Claims**

1. A process for sulfonating organic polymers which comprises contacting a sulfonatable solid organic polymer which has hydrogen atoms bonded to carbon atoms which are replaceable by sulfonic acid groups with a dry gaseous mixture comprising sulfur trioxide and halogen selected from the group consisting of fluorine, bromine, chlorine, or mixtures thereof which inherently form interhalogen compounds, wherein the amount of sulfur trioxide is sufficient to provide a desired degree of sulfonation and the amount of halogen is sufficient to accelerate the rate of sulfonation at least 10 percent relative to the rate of sulfonation achieved by using sulfur trioxide in the absence of halogen.

2. The process of Claim 1 wherein the mixture is a gaseous mixture of sulfur trioxide, chlorine and a dry gas inert to the sulfonation.

3. The process of Claim 2 wherein the dry gas is dry air or nitrogen.

4. The process of Claim 1 wherein the polymer is a polymer of an alpha-olefin or a monovinylidene aromatic monomer.

5. The process of Claim 1 wherein the polymer is polyethylene or polypropylene.

6. The process of any one of the preceding claims wherein the amount of sulfur trioxide is from 0.1 to 50 volume percent of the dry mixture and the amount of halogen is from 0.1 to 99 volume percent of the dry mixture.

7. The process of Claim 6 wherein the amount of sulfur trioxide is from 5 to 20 volume percent of the dry mixture and the amount of halogen is from 20 to 80 volume percent of the dry mixture.

8. The process of Claim 1, 2 or 3 wherein the polymer is an addition homopolymer or copolymer of one or more of the following monomers: aliphatic alpha-monoolefins, aliphatic conjugated and nonconjugated polyenes including dienes and trienes, halogenated aliphatic olefins, alpha-beta-ethylenically unsaturated carboxylic acids, vinyl esters of nonpolymerizable carboxylic acids, alkyl esters of alpha-beta-ethylenically unsaturated carboxylic acids, monovinylidene aromatic monomers, alpha-beta-ethylenically unsaturated nitriles and other ethylenically unsaturated monomers which polymerize across the ethylenic bond to form polymers having a linear carbon to carbon backbone molecular structure of a plurality of free hydrogen atoms attached to the chain and/or attached to carbon atoms of substituents of the chain.

9. The process of Claim 7 wherein the process is carried out at a sulfonation temperature in the range from 10° to 50°C.

10. A sulfonated article formed from an organic polymeric material having hydrogen atoms bonded to carbon atoms wherein the hydrogen atoms are replaceable by sulfonic acid group, said article being sulfonated in a vapor phase process employing a dry gaseous mixture of sulfur trioxide and a halogen selected from fluorine, bromine, chlorine or mixtures thereof, and wherein the concentration of the sulfur trioxide in the gaseous mixture provides a sulfonation of the article surface of from 0.001 to 50 mg of sulfur trioxide equivalents in the form of sulfonic acid groups per square centimeter of surface area and the amount of halogen is sufficient to accelerate the rate of sulfonation at least 10 percent relative to the rate of sulphonation achieved by using sulphur trioxide in the absence of halogen.

11. The article of Claim 10, wherein the sulfonation of the article surface is from 0.06 to 10 mg of sulfur trioxide equivalents in the form of sulfonic acid groups per square centimeter of surface area.

12. The article of Claim 10, wherein the article surface contains from 0.04 to 0.1 milliequivalent of halogen per milliequivalent of sulfur trioxide.

13. The article of any one of Claims 10, 11 or 12, comprising a container adapted to contain liquid or gaseous products.

14. The article of Claim 13, wherein said products are liquid or gaseous hydrocarbons.

**Patentansprüche**

1. Ein Verfahren zum Sulfonieren von organischen Polymeren, dadurch gekennzeichnet, daß man ein sulfonierbares festes organisches Polymeres, das an Kohlenstoffatome gebundene Wasserstoffatome enthält, die durch Sulfonsäuregruppen ersetzbar sind, mit einer trockenen Gasmischung in Berührung bringt, die Schwefeltrioxid und ein Halogen ausgewählt aus der Gruppe bestehend aus Fluor, Brom, Chlor oder Mischungen davon, die inhärent Interhalogenverbindungen bilden, enthält, wobei die Menge des Schwefeltrioxids ausreichend ist, um den gewünschten Sulfonierungsgrad zu ergeben, und die Menge des Halogens ausreichend ist, um die Sulfonierungsgeschwindigkeit mindestens um 10% zu erhöhen relativ zu der Sulfonierungsgeschwindikeit bei Verwendung von Schwefeltrioxid in Abwesenheit von Halogen.

2. Das Verfahren nach Anspruch 1, dadurch gekennzeichnet, daß die Mischung eine gasförmige Mischung von Schwefeltrioxid, Chlor und einem trocknen gegenüber der Sulfonierung inerten Gas ist.

3. Das Verfahren nach Anspruch 2, dadurch gekennzeichnet, daß das trockne Gas trockne Luft oder Stickstoff ist.

4. Das Verfahren nach Anspruch 1, dadurch gekennzeichnet, daß das Polymere ein Polymeres eines alpha-Olefins oder eines monovinylidenaromatischen Monomeren ist.

5. Das Verfahren nach Anspruch 1, dadurch gekennzeichnet, daß das Polymere Polyethylen oder Polypropylen ist.

6. Das Verfahren nach einem der vorhergehenden Ansprüche, dadurch gekennzeichnet, daß die Menge des Schwefeltrioxids 0.1 bis 50 Volum% der trocknen Mischung beträgt und daß die Menge des Halogens 0.1 bis 99 Volum% der trocknen Mischung ist.

7. Das Verfahren nach Anspruch 6, dadurch gekennzeichnet, daß die Menge des Schwefeltrioxids 5 bis 20 Volum% der trocknen Mischung ist und die Menge des Halogens 20 bis 80 Volum% der trocknen Mischung ist.

8. Das Verfahren nach den Ansprüchen 1, 2 oder 3, dadurch gekennzeichnet, daß das Polymere ein Additions-Homopolymeres oder -Copolymeres von einem der folgenden Monomeren ist: aliphatische alpha-Monoolefine, aliphatische konjugierte und nicht-konjugierte Polyene einschließlich Dienen und Trienen, halogenierte aliphatische Olefine, alpha-beta-ethylenisch ungesättigte Carbonsäuren, Vinylester von nicht-polymerisierbaren Carbonsäuren, Alkylester von alpha-beta-ethylenisch ungesättigten Carbonsäuren, monovinylidenaromatische Monomere, alpha-beta-ethylenisch ungesättigte Nitrile und ander ethylenisch ungesättigte Monomere, die über ethylenische Bindung polymerisieren und Polymere bilden mit Kohlenstoff-Kohlenstoff-Rückgratmolekularstruktur mit einer Vielzahl von Wasserstoffatomen, die an die Kette gebunden sind und/oder an die Kohlenstoffatome von Substituenten der Kette gebunden sind.

9. Das Verfahren nach Anspruch 7, dadurch gekennzeichnet, daß das Verfahren bei einer Sulfonierungstemperatur im Bereich von 10° bis 50°C durchgeführt wird.

10. Ein sulfonierter Gegenstand, dadurch gekennzeichnet, daß er hergestellt worden ist aus einem organischen polymeren Material mit an Kohlenstoffatomen gebundenen Wasserstoffatomen, wobei die Wasserstoffatome durch Sulfonsäuregruppen ersetzbar sind und wobei dieser Gegenstand in einem Dampfphasenverfahren unter Verwendung einer trocknen gasförmigen Mischung von Schwefeltrioxid und einem Halogen ausgewählt aus Fluor, Brom, Chlor oder Mischungen davon sulfoniert worden ist, und wobei die Konzentration des Schwefeltrioxids in der gasförmigen Mischung eine Sulfonierung der Oberfläche des Gegenstandes von 0.001 bis 50 mg Schwefeltrioxidäquivalenten in Form von Sulfonsäuregruppen pro Quadratzentimeter des Oberflächenbereichs ergibt und die Menge des Halogens ausreichend ist, um die Sulfonierungsgeschwindigkeit mindestens um 10% zu beschleunigen relativ zu der Sulfonierungsgeschwindigkeit bei Verwendung von Schwefeltrioxid in Abwesenheit von Halogen.

11. Der Gegenstand nach Anspruch 10, dadurch gekennzeichnet, daß die Sulfonierung des Oberflächenbereichs 0.06 bis 10 mg Schwefeltrioxidäquivalente in Form von Schwefelsäuregruppen pro Quadratzentimeter des Oberflächenbereichs beträgt.

12. Der Gegenstand von Anspruch 10, dadurch gekennzeichnet, daß der Oberflächenbereich 0.04 bis 0.1 Milliäquivalent Halogen pro Milliäquivalent Schwefeltrioxid enthält.

13. Der Gegenstand nach einem der Ansprüche 10, 11 oder 12, dadurch gekennzeichnet, daß er ein für die Aufnahme eines flüchtigen oder gasförmigen Produkts geeigneter Behälter ist.

14. Der Gegenstand nach Anspruch 13, dadurch gekennzeichnet, daß diese Produkte flüssige oder gasförmige Kohlenwasserstoffe sind.

## Revendications

1. Procédé de sulfonation de polymères organiques, qui consiste à mettre en contact un polymère organique solide sulfonable qui a des atomes d'hydrogène liés à des atomes de carbone qui sont remplaçables par des groupements acide sulfonique, avec un mélange gazeux sec comprenant de l'anhydride sulfurique et un halogène choisi dans le groupe comprenant le fluor, le brome, le chlore et leurs mélanges, qui ont la propriété de former des composés inter-halogénés, la quantité d'anhydride sulfurique étant suffisante pour assurer un degré de sulfonation voulu et la quantité d'halogène étant suffisante pour accélérer la vitesse de sulfonation d'au moins 10% par rapport à la vitesse de sulfonation obtenue en utilisant de l'anhydride sulfurique en l'absence d'halogène.

2. Procédé selon la revendication 1, dans lequel le mélange est un mélange gazeux d'anhydride sulfurique, de chlore et d'un gaz sec inerte vis-à-vis de la sulfonation.

3. Procédé selon la revendication 2, dans lequel le gaz sec est de l'air ou de l'azote sec.

4. Procédé selon la revendication 1, dans lequel le polymère est un polymère d'une alpha-oléfine ou d'un monomère aromatique de monovinylidène.

5. Procédé selon la revendication 1, dans lequel le polymère est un polyéthylène ou un polypropylène.

6. Procédé selon l'une quelconque des revendications précédentes, dans lequel la quantité d'anhydride sulfurique représente de 0,1 à 50 volumes pour cent du mélange sec et la quantité d'halogène représente de 0,1 à 99 volumes pour cent du mélange sec.

7. Procédé selon la revendication 6, dans lequel la quantité d'anhydride sulfurique représente de 5

**0 045 323**

à 20 volumes pour cent du mélange sec et la quantité d'halogène représente de 20 à 80 volumes pour cent du mélange sec.

8. Procédé selon la revendication 1, 2 ou 3, dans lequel le polymère est un homopolymère ou un copolymère d'addition d'un ou plusieurs des monomères suivants: alpha-mono-oléfines aliphatiques, polyènes, y compris diènes et triènes, aliphatiques conjugués et non conjugués, oléfines aliphatiques halogénées, acides carboxyliques alpha-bêta-éthyléniquement insaturés, esters vinyliques d'acides carboxyliques non polymérisables, esters alkyliques d'acides carboxyliques alpha-bêta-éthyléniquement insaturés, monomères aromatiques de monovinylidène, nitriles alpha-bêta-éthyléniquement insaturés, et autres monomères éthyléniquement insaturés qui se polymérisent au niveau de la liaison éthylénique en formant des polymères à structure moléculaire à enchaînement linéaire carbone-carbone avec un grand nombre d'atomes d'hydrogène libres fixés à la chaîne et/ou fixés à des atomes de carbone de substituants de la chaîne.

9. Procédé selon la revendication 7, dans lequel on opère à une température de sulfonation située dans l'intervalle de 10° à 50°C.

10. Article sulfoné formé à partir d'une substance polymère organique ayant des atomes d'hydrogène liés à des atomes de carbone dans laquelle les atomes d'hydrogène sont remplaçables par des groupements acide sulfonique, ledit article étant sulfoné selon un procédé en phase vapeur faisant appel à un mélange gazeux sec d'anhydride sulfurique et d'un halogène choisi entre le fluor, le brome, le chlore et leurs mélanges, et dans lequel la concentration de l'anhydride sulfurique dans le mélange gazeux assure une sulfonation de la surface de l'article correspondant à 0,001 à 50 mg d'équivalents d'anhydride sulfurique, sous la forme de groupements acide sulfonique, par centimètre carré de surface, et la quantité d'halogène est suffisante pour accélérer la vitesse de sulfonation d'au moins 10% par rapport à la vitesse de sulfonation obtenue lorsqu'on utilise de l'anhydride sulfurique en l'absence d'halogène.

11. Article selon la revendication 10, dans lequel la sulfonation de la surface de l'article correspond à 0,06 à 10 mg d'équivalents d'anhydride sulfurique, sous la forme de groupements acide sulfonique, par centimètre carré de surface.

12. Article selon la revendication 10, dans lequel la surface de l'article contient de 0,04 à 0,1 milliéquivalent d'halogène par milliéquivalent d'anhydride sulfurique.

13. Article selon l'une quelconque des revendications 10, 11 ou 12, comprenant un récipient destiné à contenir des produits liquides ou gazeux.

14. Article selon la revendication 13, dans lequel lesdits produits sont des hydrocarbures liquides ou gazeux.

9